# EUROPÄISCHE PATENTANMELDUNG

(11) **EP 1 547 985 A1**
(43) Veröffentlichungstag der Anmeldung: **29.06.2005**
(21) Anmeldenummer: 03029596.8
(22) Anmeldetag: 23.12.2003
(51) Int. Cl.: C04B 20/10, C04B 28/02

(54) **Trockenes Zusatzmittel für hydraulische Bindemittel**

(71) Anmelder: Sika Technology AG, 6340 Baar (CH)
(72) Erfinder: Lindlar, Benedikt, 78467 Konstanz (DE); Schiegg, André, 8912 Obfelden (CH)
(74) Vertreter: Isler, Jörg

(57) **Zusammenfassung**

Die vorliegende Erfindung betrifft ein trockenes Zusatzmittel für hydraulische Bindemittel, dessen Herstellung sowie dessen Verwendung. Das feste Zusatzmittel zeichnet sich dadurch aus, dass ein flüssiges Zusatzmittel 1 in einem ein mikroporösen Träger 2 angeordnet ist. Damit lassen sich hydraulisch abbindende Zusammensetzungen 3 formulieren, welche bedeutend bessere Lagerstabilität als die entsprechend hydraulische Zusammensetzung, der das flüssige Zusatzmittel 1 direkt beigemengt wurde. Weiterhin offenbart die Erfindung ein Verfahren zur Sanierung von ausgehärteten hydraulischen Zusammensetzungen wie Beton, und damit eine Möglichkeit eines Korrosionsschutzes von Armierungseisen in bereits ausgehärteten hydraulischen Zusammensetzungen.

## Beschreibung

### Technisches Gebiet

Die Erfindung betrifft trockene Zusatzmittel für hydraulische Bindemittel.

### Stand der Technik

Trockene Zusatzmittel für hydraulische Bindemittel werden alleine oder auch bereits zugemischt, z.B. als Trockenbeton oder Trockenmörtel verkauft. Solche Trockenmischungen weisen eine relativ gute Lagerstabilität und -beständigkeit auf, da bei Gemischen aus trockenen pulvrigen Rohstoffen während der Lagerdauer keine Wechselwirkungen zwischen den Rohstoffen auftreten, die die Lagerfähigkeit beeinträchtigen.

Wenn dem Trockengemisch flüssige Rohstoffe bzw. Zusatzmittel zugesetzt werden sollen, zum Beispiel durch Eindüsen oder Eingiessen eines Zusatzmittels in die Pulvermischung, wird jedoch die Lagerzeit, während der die Pulvermischung ihre gewünschten Eigenschaften beibehält, drastisch reduziert. Auch Träger, welche die Flüssigkeiten auf der Oberfläche adsorbieren, sind nicht immer geeignet, Wechselwirkungen zu verhindern, dies hängt jedoch von den Eigenschaften des flüssigen Zusatzmittels ab. Insbesondere hydrophile Flüssigkeiten mit nennenswertem Dampfdruck können in die Pulvermischung migrieren und unerwünschte Effekte bewirken.

### Darstellung der Erfindung

Der Erfindung liegt die Aufgabe zugrunde, bei einem trockenen Zusatzmittel für hydraulische Bindemittel der eingangs genannten Art eine ausreichende Lagerstabilität auch bei der Verwendung mindestens eines flüssigen Zusatzmittels zu erzielen.

Erfindungsgemäss wird dies durch die Merkmale des ersten Anspruches erreicht.

Die Vorteile des erfindungsgemässen trockenen Zusatzmittels liegen einerseits darin, dass das trockene Zusatzmittel lagerstabil und einfach zu dosieren ist, und insbesondere darin, dass damit formulierte hydraulisch abbindende Zusammensetzung über eine wesentlich verbesserte Lagerstabilität verfügen, als eine entsprechende Zusammensetzung, welcher das entsprechende flüssige Zusatzmittel im flüssigen Zustand beigemengt wurde.

Ein weiterer Vorteil liegt darin, dass erst bei der Verarbeitung bei der Zugabe von Wasser das im mikroporösen Träger absorbierte flüssige Zusatzmittel verzögert freigesetzt wird und in das hydraulische Bindemittel, beziehungsweise in die Matrix, migriert.

Ferner ist ein weiterer Vorteil zu erwähnen, dass ein korrosionshemmendes Zusatzmittel die in einer ausgehärteten hydraulischen Zusammensetzung vorhandenen Armierungseisen vor Korrosion schützt.

Ferner kann in gewissen Grenzen durch geeignete Kombination von dem mikroporösen Träger und dem flüssigen Zusatzmittel auf die Kinetik der Freisetzung Einfluss genommen werden.

Weitere vorteilhafte Ausgestaltungen der Erfindung ergeben sich aus den Unteransprüchen.

### Kurze Beschreibung der Zeichnung

Im folgenden wird anhand der Zeichnungen die Erfindung näher erläutert. Gleiche Elemente sind in den verschiedenen Figuren mit den gleichen Bezugszeichen versehen.

### Es zeigen:

- Fig. 1:: Eine schematische Ansicht eines mikroporösen Trägers beladen mit einem flüssigen Zusatzmittel;
- Fig. 2:: Eine schematische Ansicht einer hydraulisch abbindenden Zusammensetzung enthaltend einen mit einem flüssigen Zusatzmittel beladenen mikroporösen Träger;
- Fig. 3:: Eine schematische Ansicht einer ausgehärteten hydraulischen Zusammensetzung und einer für Sanierungszwecke eingesetzten hydraulisch abbindenden Zusammensetzung enthaltend ein mit einem flüssigen Zusatzmittel beladenen mikroporösen Träger;

### Ausführung der Erfindung

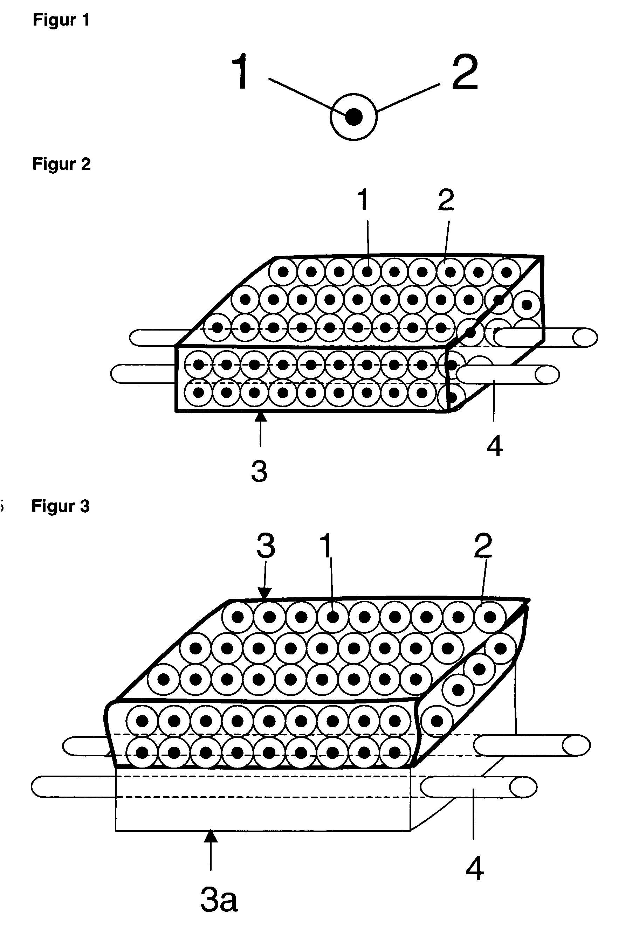

Figur 1 zeigt einen mit mindestens einem flüssigen Zusatzmittel 1 beladenen mikroporöser Träger 2. Dabei wird der mikroporöse Träger 2 auf einem Trockenmischer mit dem flüssigen Zusatzmittel 1 gemischt.

Geeignete mikroporöse Träger 2 sind mikroporöse Molekularsiebe, vorzugsweise Zeolithe, insbesondere synthetische Zeolithe.

Die mikroporöse Struktur des Trägers 2 zeichnet sich durch ein Porensystem mit definiertem Porenradius und spezifischer Porenoberfläche aus. Je nach gewünschter Struktur sind durch dieses Porensystem größere Hohlräume verbunden. Diese Eigenschaft erlaubt die gezielte Adsorption von Molekülen auf der Basis von Molekülgröße und Polarität.

Als Träger kommen somit mikroporöse Molekularsiebe in Frage, insbesondere Zeolithe. Zeolithe können synthetisch hergestellt werden oder kommen natürlich vor in ehemals vulkanischen Gebieten, wo sie beispielsweise in Italien, im Tagebau abgebaut werden.

Kommerzielle Zeolithe haben Porendurchmesser, welche üblicherweise in einem Bereich von 3 bis 10 Angström(10⁻¹⁰ m), bevorzugt zwischen 4 und 8 Angström, liegen, jedoch auch grösser sein können.

Bevorzugt liegen die mikroporösen Träger in Pulverform vor, insbesondere mit einem mittleren Korndurchmesser von weniger als 100 Mikrometer, bevorzugt zwischen 100 und 10 Mikrometer, meist bevorzugt zwischen 50 und 25 Mikrometer. In der Produktion fallen Zeolithe als sehr feines Pulver an und werden unter Umständen mit einem Bindemittel zu gröberen Partikeln verarbeitet. Für die Verwendung als mikroporöser Träger sind Zeolithe jedoch als Pulver bevorzugt. Eine mögliche Vorbehandlung ist die Teilsättigung der Zeolithe mit Wasser. Dies ist bei der vorliegenden Erfindung besonders vorteilhaft, um das Imprägnieren mit dem flüssigen Zusatzmittel zu vereinfachen.

Besonders bevorzugt sind Zeolithe vom Typ Zeolith A, Linde Typ-A (LTA). Noch mehr bevorzugt sind Kationen-ausgetauschte Zeolithe ohne oder zumindest weitgehend ohne Alkalionen.

Durch die Variation des Aluminium/Silizium-Verhältnisses kann die Hydrophile und Hydrophobie gesteuert werden. Diese Eigenschaft kann verwendet werden, um die Eignung eines spezifischen Zeoliths für das verwendete flüssige Zusatzmittel auszuwählen oder anzupassen.

Um das Zusatzmittel in den Träger einzubringen, wird der Träger in einen Trockenmischer eingebracht und mit einer Düse das flüssige Zusatzmittel in den Mischer zugemischt und gerührt.

Der Gehalt des flüssigen Zusatzmittels 1 bezüglich des Trägers 2 liegt üblicherweise in einem Bereich von bis zu 100 Gew. % des Trägers, insbesondere von 10 bis 80 Gew. %. Dies ist jedoch auch abhängig von der Art des verwendeten Zeolithen und dessen Parameter.

Je nach Anwendung und/oder Art des Zusatzmittels kann es von Vorteil sein, die Möglichkeit der physikalisch und chemische Beladung des mikroporösen Trägermaterials mit dem flüssigen Zusatzmittel nicht vollständig auszuschöpfen.

Der mit dem flüssigen Zusatzmittel 1 beladene Träger 2 ist trocken und mindestens ein Jahr lagerstabil.

Als Zusatzmittel 1 können beliebige flüssige Betonzusatzmittel verwendet werden. Vorteilhaft ist die Verwendung von Beschleunigern, Korrosionsinhibitoren, Verflüssigern, Verzögerer, Schwindreduzierer, Entschäumern, usw. Die Verwendung der oben genannten Zusatzmittel wird jedoch durch die Kinetik der Freigabe aus dem Träger eingeschränkt. Das Material des Träger, insbesondere dessen Porengrösse und Zusammensetzung wird bevorzugt so gewählt, dass die Kinetik der Freisetzung zur Funktion des Zusatzmittels angepasst ist. Beispielsweise ist bei einem Verflüssiger oder Entschäumer eine schnelle Freisetzung erwünscht, während bei einem Korrosionsinhibitor eine verzögerte Freisetzung vorteilhaft ist.

Der mit einem Zusatzmittel beladene mikroporöse Träger kann Bestandteil einer trockenen hydraulisch abbindenden Zusammensetzung sein, ohne die Lagerstabilität dieser Mischung zu beeinträchtigen. Der mit dem Zusatzmittel beladene mikroporöse Träger kann mit in einer Menge von 0.05 bis 50 Gew. %, bevorzugt in einer Menge von 0.05 bis 20 Gew. % in einer hydraulisch abbindenden Zusammensetzung vorhanden sein. Die hydraulisch abbindende Zusammensetzung umfasst weiterhin mindestens ein hydraulisches Bindemittel. Das hydraulische Bindemittel umfasst mindestens einen Zement, insbesondere mindestens einen Zement gemäss Euronorm EN 197 oder Calciumsulfat, in Form von Anhydrit, Halbhydrat- oder Dihydratgips; oder Calciumhydroxid. Bevorzugt sind Portlandzemente, Sulfoaluminatzemente und Tonerdeschmelzzemente, insbesondere Portlandzement. Mischungen von Zementen können zu besonders guten Eigenschaften führen. Für eine schnelle Aushärtung kommen vor allem zementöse Schnellbindemittel zum Einsatz, die vorzugsweise mindestens einen Tonerdeschmelzzement oder eine andere Aluminatquelle, wie beispielsweise aluminatspendende Klinker, und gegebenenfalls Calciumsulfat, in Form von Anhydrit, Halbhydrat- oder Dihydratgips; und/oder Calciumhydroxid enthalten. Als Bestandteil des hydraulischen Bindemittels wird Zement, insbesondere Portlandzement, bevorzugt.

Die so erhaltenen trockene, pulverförmige hydraulisch abbindende Zusammensetzung ist dabei im wesentlichen gleich lange, mindestens aber 90% so lange, lagerstabil, wie die entsprechende hydraulisch abbindende Zusammensetzung ohne das erfindungsgemässe trockene Zusatzmittel, entsprechend üblicherweise einem Zeitraum von 12 bis 15 Monaten.

Prinzipiell kann durch die Wahl geeigneter Zeolithe mit unterschiedlichen Kationen, z.B. H⁺, Na⁺, K⁺, Ca²⁺ das Adsorptions- und Freisetzungsverhalten sowie mögliche Auswirkungen auf die zementöse Mischung beeinflusst werden.

Die hydraulisch abbindenden Zusammensetzung kann beispielsweise ein Fertigmörtel, ein Reparaturmörtel, ein Werktrockenmörtel oder ein Beton sein.

Diese hydraulisch abbindende Zusammensetzung verfügt über eine Lagerstabilität die bedeutend verbessert ist im Vergleich zu derselben hydraulisch abbindende Zusammensetzung, welche anstelle des trockenen Zusatzmittels direkt mit dem für die Herstellung des trockenen Zusatzmittels verwendeten flüssigen Zusatzmittel versetzt wird.

Lagerstabilität ist hierbei gegeben, wenn das Wasser/Zement-Verhältnis ± 3% gleich bleibt, um zu denselben Applikationseigenschaften zu gelangen wie vor der Lagerung.

Für die Verarbeitung der trockenen hydraulisch abbindenden Zusammensetzung wird eine benötigte Menge Wasser zugegeben und die Mischung verarbeitet. Die Menge des benötigten Wassers richtet sich in erster Linie nach dem vom Fachmann üblich verwendeten Wasser/Zement-Verhältnis. Durch die Verarbeitung und die Zementabbindreaktion wird das flüssige Zusatzmittel 1 aus der Porenstruktur des Trägers 2 freigesetzt und das Zusatzmittel 1 migriert in das hydraulische Bindemittel. Die Geschwindigkeit der Freigabe des Zusatzmittels wird dabei je nach Art des Zusatzmittels eingestellt und kann auch verzögert erfolgen. Nach dem Kontakt mit Wasser härtet die hydraulisch abbindenden Zusammensetzung aus.

Figur 2 zeigt schematisch eine hydraulisch abbindende Zusammensetzung mit einem mikroporösen Träger 2, der mit einem flüssigen Zusatzmittel 1 beladen ist. Beim Zusatzmittel handelt es sich hierbei um ein korrosionshemmendes flüssiges Zusatzmittel 1. Hierbei wird die Abgabe vorzugsweise langsam erfolgen, um die in der hydraulisch abbindende Zusammensetzung 3 vorhanden Armierungseisen 4 vor Korrosion zu schützen.

Als Korrosionsinhibitoren können z.B. Alkanolamine, Alkohole, organische Säuren, Phosphonate verwendet werden. Als Alkanolamine sind insbesondere Ethanolamine oder N-alkylierte Ethanolamine geeignet, bevorzugt ausgewählt aus der Gruppe umfassend Monoethanolamin, Diethanolamin, Triethanolamin, N-Methyldiethanolamin, N,N-Dimethylethanolamin sowie Mischungen davon.

Besonders bevorzugt wird Monoethanolamin (MEA) verwendet.

In Figur 3 ist die Sanierung einer ausgehärteten hydraulischen Zusammensetzung 3a, z.B. einem Beton, mit einer hydraulisch abbindende Zusammensetzung 3, z.B. einem Mörtel, dargestellt. Die zu reparierende ausgehärteten hydraulische Zusammensetzung 3a, die carbonatisiert, Chloridverseucht, brüchig, löchrig oder rissig ist und/oder an gewissen Stellen sichtbare Armierungseisen 4 aufweist, kann durch Bearbeiten der Oberfläche, beispielsweise durch Meisseln oder Wegschlagen mittels eines Hammers oder ähnlichen Mitteln vorbereitet werden, insbesondere derart bis man auf intakten Beton stösst. Die hydraulisch abbindende Zusammensetzung wird hierbei mit Wasser vermischt und auf die ausgehärtete hydraulische Zusammensetzung 3a appliziert. Bei der Verarbeitung der hydraulisch abbindenden Zusammensetzung 3 wird das flüssige Zusatzmittel 1, vorzugsweise verzögert, freigesetzt, migriert in der hydraulische abbindenden Zusammensetzung 3 und dann in die ausgehärtete hydraulische Zusammensetzung 3a, beispielsweise dem Beton, ein. Falls das im Träger 2 vorhandene flüssige Zusatzmittel 1 ein Korrosionsinhibitor ist, zieht das Zusatzmittel auf das Armierungseisen 4 auf, was zu einem Korrosionsschutz führt. Je nach Anwendung und Art des Zusatzmittels kann es von Vorteil sein, dass das flüssige Zusatzmittel vor, während oder nach der Applikation freigesetzt wird.

Diese Methode stellt deshalb eine Möglichkeit dar, wie Armierungseisen in bereits ausgehärteten hydraulischen Zusammensetzungen vor Korrosion geschützt werden können.

### Beispiele

Die Erfindung wird nun anhand von Beispielen näher erläutert. Diese sollen die Erfindung weiter veranschaulichen, den Umfang der Erfindung aber in keiner Weise beschränken.

### 1. Trockene Zusatzmittel

Als Beispiele ***B1, B2*** und ***B3*** für einen mikroporösen Träger 2 wurden die Zeolithe

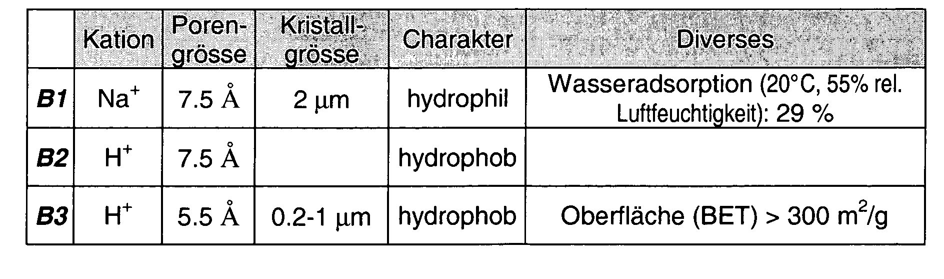

sowie, mit 10, 20 und 50 Gewichts-%, bezogen auf das Gewicht des Trägers, Monoethanolamin (MEA)(kommerziell erhältlich bei Fluka Chemie GmbH, Schweiz) als flüssiges Zusatzmittel versetzt und durch einfaches Mischen in einem Trockenmischer homogenisiert.

Anschliessend wurde die Rieselfähigkeit sowie der Geruch mittels Auge oder Nase nach der in Tabelle 1 angegebenen Skala beurteilt und in Tabelle 2 zusammengestellt.

**Tabelle 1.**

| Beurteilung von Rieselfähigkeit und Geruch. | | | | |
|---|---|---|---|---|
| | **-** | **o** | **+** | **++** |
| Riesel-fähigkeit | schlecht Starkes Verklumpen | mittel l eichtes Verklumpen | gut kein Verklumpen | sehr gut kein Verklumpen |
| Geruch | sehr stark sehr störend | stark störend | gering leicht störend | kein nicht störend |

**Tabelle 2.**

| Trockene Zusatzmittel. | | | | |
|---|---|---|---|---|
| | Trägermaterial | ***B1*** | ***B2*** | ***B3*** |
| 10% MEA | | ***B1-10*** | ***B2-10*** | ***B3-10*** |
| | Rieselfähigkeit | **++** | **++** | **++** |
| | Geruch | **++** | **++** | **++** |
| 20% MEA | | ***B1-20*** | ***B2-20*** | ***B3-30*** |
| | Rieselfähigkeit | **++** | **+** | **++** |
| | Geruch | **++** | **-** | **++** |
| 50% M EA | | ***B1-50*** | ***B2-50*** | ***B3-50*** |
| | Rieselfähigkeit | **o** | **+** | **o** |
| | Geruch | **-** | **o** | **- -** |

### 2. Hydraulisch abbindende Zusammensetzungen

Auf 100 g SikaQuick® 506 (kommerziell erhältlich bei Sika Schweiz AG) -als Beispiel einer trockenen hydraulisch abbindenden Zusammensetzungwurden 0.5 g ***B1-20*** zugemischt. Als Referenz ***R1*** und ***R2*** wurden 0.083 g MEA auf 100 g SikaQuick® 506 gemischt.

Diese drei Proben sowie eine Probe SikaQuick® 506 wurden während 180 Tagen in einem geschlossenen Gebinde bei Raumtemperatur gelagert, und anschliessend gemäss EN 480-1 mit Wasser vermischt und beurteilt. Die Referenz ***R3*** erfolgte durch Mischen der gelagerten Probe des SikaQuick® 506 mit Anmachwasser, welchem 0.091 g MEA auf 100g SikaQuick® 506 beigeben wurde.
Die Proben wurden anhand der folgenden Parameter beurteilt:
- Luftgehalt gemessen analog zu EN 12350-7 (Betonprüfung)
- Ausbreitmass gemessen nach 10 Min. und 15 Schlägen nach DIN 18555-2
- Verarbeitung: Beurteilung der Kohäsion und Zähigkeit durch den Fachmann
- Druckfestigkeit nach 28 Tagen Aushärtung bei 23°C und 50% rel. Luftfeuchtigkeit nach EN 196-1
- Biegezugfestigkeit nach 28 Tagen Aushärtung bei 23°C und 50% rel. Luftfeuchtigkeit nach EN 196-1
- Trocknungsschwinden nach 91 Tagen bei 23°C und 50 % rel. Luftfeuchtigkeit nach DIN 52450

**Tabelle 3**

| Eigenschaften hydraulischer Zusammensetzungen | | | | |
|---|---|---|---|---|
| | ***R1*** | ***R2*** | ***R3*** | ***B1-20*** |
| Anmachwasser [Gew.-%] | 16.5 | 17 | 15 | 15 |
| Luftgehalt [%] | 5.2 | 5.2 | 6.0 | 5.6 |
| Ausbreitmass [mm] | 135 | 149 | 145 | 148 |
| Verarbeitbarkeit | zu steif | gut | Gut | gut |
| Druckfestigkeit [MPa] | 28.4 | 22.9 | 32.7 | 33.1 |
| Biegezugfestigkeit [MPa] | 5.7 | 5.5 | 7.2 | 7.0 |
| Trocknungsschwinden [mm/m] | | -1.44 | -1.25 | -1.26 |

Tabelle 3 zeigt die Resultate dieser Beurteilung. Es fällt hierbei auf, dass der Zusatz des festen Zusatzmittels **(*B1*-*20*)** im Gegensatz zum Zusatz des flüssigen Zusatzmittels ***(R1*** und ***R2)*** die Lagerstabilität der hydraulisch abbindenden Zusammensetzung nicht verschlechtert, wie aus dem Vergleich mit ***R3*** ersichtlich wird. Die Beispiele ***R1*** und ***R2*** benötigen einen wesentlich höheren Wasseranteil, um dieselbe Verarbeitbarkeit, insbesondere das Ausbreitmass, zu erhalten. Ein höherer Wasserbedarf wirkt sich jedoch nachteilig auf die mechanischen Eigenschaften, das Schwinden und damit auch auf die Permeabilität aus.

Weiterhin wurde beobachtet, dass die Festigkeiten und Schwindwerte von ***B1-20*** vergleichbar mit der Referenz ***R3*** sind und zwar nach oder ohne Lagerung. Die Referenzen ***R1*** und ***R2*** im Vergleich zu ***B1-20*** wiesen zudem nach Lagerung einen wesentlichen verschlechterten Schwind- und Festigkeitswerte sowie eine stark erhöhte Permeabilität auf.

### Bezugszeichenliste

- 1: Flüssiges Zusatzmittel
- 2: Mikroporöser Träger
- 3: Hydraulische abbindende Zusammensetzung
- 3a: Ausgehärtete hydraulische Zusammensetzung
- 4: Armierungseisen

## Patentansprüche

1. Trockenes Zusatzmittel für hydraulische Bindemittel, **dadurch gekennzeichnet, dass** ein flüssiges Zusatzmittel (1) in einem mikroporösen Träger (2) angeordnet ist.

2. Trockenes Zusatzmittel gemäss Anspruch 1, **dadurch gekennzeichnet, dass** das flüssige Zusatzmittel (1) ein Verflüssiger, Beschleuniger, Verzögerer, Entschäumer, Schwindreduzierer oder ein Korrosionsinihibitor ist.

3. Trockenes Zusatzmittel gemäss Anspruch 2, **dadurch gekennzeichnet, dass** das flüssige Zusatzmittel (1) ein Korrosionsinhibitor, insbesondere ein Alkanolamin, ein Alkohol, eine organische Säure, ein Phosphonat, bevorzugt Monoethanolamin, ist.

4. Trockenes Zusatzmittel gemäss einem der Ansprüche 1 bis 3, **dadurch gekennzeichnet, dass** der mikroporöse Träger (2) ein Molekularsieb, insbesondere Zeolithe, bevorzugt ein Zeolith A, Linde Typ-A (LTA).

5. Trockenes Zusatzmittel gemäss Anspruch 4, **dadurch gekennzeichnet, dass** der mikroporöse Träger (2) in Pulverform vorliegt , insbesondere mit einem mittleren Korndurchmesser von weniger als 100 Mikrometer, bevorzugt zwischen 100 und 10 Mikrometer, meist bevorzugt zwischen 50 und 25 Mikrometer.

6. Trockenes Zusatzmittel gemäss einem der Ansprüche 1 bis 5, **dadurch gekennzeichnet, dass** der mikroporöse Träger einen Porendurchmesser zwischen 3 und 10 Angström, bevorzugt zwischen 4 und 8 Angström, aufweist.

7. Trockenes Zusatzmittel gemäss einem der Ansprüche 1 bis 6, **dadurch gekennzeichnet, dass** das mit dem flüssigen Zusatzmittel (1) beladene Träger (2) eine Lagerstabilität von mehr als einem Jahr hat.

8. Hydraulisch abbindende Zusammensetzung (3) umfassend ein trockenes Zusatzmittel gemäss einem der Ansprüche 1 bis 7 sowie ein hydraulisches Bindemittel.

9. Hydraulisch abbindende Zusammensetzung gemäss Anspruch 8, **dadurch gekennzeichnet, dass** das hydraulische Bindemittel einen Zement, insbesondere einen Portlandzement, enthält.

10. Hydraulisch abbindende Zusammensetzung gemäss Anspruch 8 oder 9, **dadurch gekennzeichnet, dass** die Lagerstabilität im wesentlichen gleich lange, mindestens aber 90% so lange, ist, wie die der entsprechenden hydraulisch abbindenden Zusammensetzung ohne das trockene Zusatzmittel gemäss Anspruch 1 bis 7.

11. Hydraulisch abbindende Zusammensetzung gemäss einem der Ansprüche 8 bis 10, **dadurch gekennzeichnet, dass** die hydraulisch abbindende Zusammensetzung ein Fertigmörtel, ein Reparaturmörtel, ein Werktrockenmörtel oder ein Beton ist.

12. Ausgehärtete hydraulische Zusammensetzung, erhalten durch die Aushärtung einer hydraulisch abbindenden Zusammensetzung gemäss einem Ansprüche 8 bis 11 mittels Wasser.

13. Verfahren zur Freisetzen von einem flüssigen Zusatzmittel aus einem trockenen Zusatzmittel gemäss einem der Ansprüche 1 bis 7, dadurch das trockene Zusatzmittel mit Wasser in Kontakt gebracht wird.

14. Verwendung eines trockenen Zusatzmittel gemäss einem der Ansprüche 1 bis 7 in einer Zusammensetzung, welche ein hydraulisches Bindemittel enthält.

15. Verfahren zur Herstellung eines trockenen Zusatzmittels gemäss Anspruch 1 bis 7, **dadurch gekennzeichnet, dass** ein flüssiges Zusatzmittel einem mikroporösen Material zugemischt und gerührt wird.

16. Verfahrung zur Sanierung einer ausgehärteten hydraulischen Zusammensetzung (3a) umfassend die Schritte
a) Vermischen einer hydraulisch abbindenden Zusammensetzung gemäss einem Ansprüche 8 bis 11 mit Wasser,
b) Freisetzen des flüssigen Zusatzmittels,
c) Applikation der mit Wasser vermischten hydraulischen Zusammensetzung auf die ausgehärteten hydraulischen Zusammensetzung (3a),
d) Migration des flüssigen Zusatzmittels in die ausgehärteten hydraulischen Zusammensetzung (3a),
wobei die Schritte b) und c) auch gleichzeitig oder in umgekehrter Reihenfolge erfolgen können.

17. Verfahrung zur Sanierung gemäss Anspruch 16, **dadurch gekennzeichnet, dass** das flüssige Zusatzmittel ein Korrosionsinhibitor, insbesondere ein Alkanolamin, ein Alkohol, eine organische Säuren, ein Phosphonat ist.

18. Verfahren zur Sanierung gemäss Anspruch 16 oder 17, **dadurch gekennzeichnet, dass** die ausgehärteten hydraulischen Zusammensetzung (3a) Armierungseisen (4) enthält.

19. Verfahren zur Sanierung gemäss Anspruch 18, **dadurch gekennzeichnet, dass** der Korrosionsinhibitor durch die ausgehärtete hydraulische Zusammensetzung (3a) migriert und auf das Armierungseisen aufzieht.
